Europäisches Patentamt

European Patent Office

Office européen des brevets

(19)

(11) Numéro de publication: **0 184 889**
**B1**

(12) # FASCICULE DE BREVET EUROPEEN

(45) Date de publication du fascicule du brevet:
24.05.89

(51) Int. Cl.⁴: **B 60 T 8/18**

(21) Numéro de dépôt: 85202012.2

(22) Date de dépôt: 03.12.85

(54) Dispositif égalisateur pour des correcteurs multiples de freinage asservis à la charge du véhicule.

(30) Priorité: 14.12.84 IT 6824284

(43) Date de publication de la demande.
18.06.86 Bulletin 86/25

(45) Mention de la délivrance du brevet:
24.05.89 Bulletin 89/21

(84) Etats contractants désignés:
DE FR GB

(56) Documents cités:
EP-A- 0 018 254
EP-A- 0 053 651
DE-A- 3 010 513
FR-A- 1 138 447

(73) Titulaire: BENDIX ALTECNA S.p.A., Zona Industriale
Casella Postale 27, I-70026 Modugno (Bari) (IT)

(72) Inventeur: Errico, Angelantonio, Via Molfetta 1a
traversa 12 D, I-70054 Giovinazzo (Bari) (IT)

(74) Mandataire: Patrito, Pier Franco, Dr. Ing.. Cabinet
PATRITO BREVETTI Via Don Minzoni 14, I-10121 Torino
(IT)

ACTORUM AG

## Description

La présente invention a pour objet un dispositif égalisateur pour un correcteur multiple de freinage asservi à la charge du véhicule.

Les correcteurs de freinage du type envisagé comprennent un corps ayant deux alésages dans lesquels glissent, sous les actions opposées de ressorts de rappel et de forces externe appliquées, deux pistons capables d'étrangler différemment, selon leur propre position, des passages qui s'étendent entre des raccords correspondants du corps. Moyennant ces raccords le correcteur de freinage est inséré dans les tubulures des circuits de freinage du véhicule. En faisant agir sur lesdits pistons des forces externes dépendantes de la charge du véhicule (relevée à travers la déformation des suspensions), on peut ainsi régler la distribution de l'action de freinage de sorte à réaliser les conditions de freinage les plus favorables. Dans certaines formes de réalisation connues de ces correcteurs de freinage, la force externe dépendant de la charge du véhicule est appliquée à la tête, fraisée en étrier, d'une tige, qui pénètre d'une façon coulissante et sur une petite longueur dans un alésage du corps du correcteur de freinage, situé sur une ligne médiane entre les alésages des pistons, et qui porte un tourillon transversal sur lequel est articulé un balancier prenant appui sur les extrémités externes des pistons. Cette disposition vise à réaliser l'application aux pistons de deux forces égales, dont la valeur est égale à la moitié de la force appliquée à la tête de la tige, et à égaliser l'action du correcteur de freinage en compensant tout déséquilibre accidental et en assurant un fonctionnement symétrique du correcteur de freinage.

Un tel correcteur est décrit dans le document EP-A 1-18 254 qui correspond au preambule de la revendication 1. Cependant, cette disposition n'atteint pas ces buts d'une manière complète et dans toutes les conditions, à cause du fait que, même en l'absence de perturbations d'origine externe, elle agit d'une manière correcte seulement si l'axe du tourillon du balancier est exactement perpendiculaire du plan contenant les axes des pistons, et si le dispositif est exactement symétrique. Tout éloignement accidental de ces conditions, dû à des défauts ou simplement à la somme des tolérances normales d'usinage, peut donner lieu à une tendance au blocage du balancier et, par conséquent, à la possibilité d'une distribution inégale des forces aux pistons, avec les inconvénients conséquents dans le freinage. De plus, puisque la tête de la tige est connectée à une transmission mécanique allant aux suspensions du véhicule, le fonctionnement du correcteur est aussi perturbé par une disposition inexacte de cette transmission; en particulier, l'application à la tige, de la part de la transmission, d'une composante de force transversale donne lieu à une augmentation des resistances au mouvement et peut conduire au blocage de la tige elle-même, laquelle n'est pas guidée par le corps du correcteur de freinage de sorte à pouvoir supporter des forces transversales. Enfin, un inconvénient de ce dispositif connu consiste en ce que le fraisage de la tige, qui doit correspondre exactement à la direction de la transmission mécanique reliée à la suspension du véhicule, doit être disposé d'une manière différente suivant le modèle de véhicule auquel le correcteur de freinage est destiné, ce qui empêche une normalisation complète de la construction des correcteurs de freinage. En outre, la disposition connue ne pourrait pas être appliquée utilement à des correcteurs de freinage ayant plus de deux pistons, comme il pourrait être nécessaire pour des applications spéciales.

Le but de la présente invention est de réaliser, dans un correcteur de freinage du type envisagé, un dispositif égalisateur qui, bien qu'étant de construction économique, soit de fonctionnement plus précis et fiable que les dispositifs égalisateurs connus, particulièrement dans le sens de prévenir des inconvénients dûs à des défauts du correcteur de freinage, du dispositif égalisateur ou des parties externes associées, ou à la somme des tolérances d'usinage, qui, en outre, ne soit pas lié à la direction de la transmission mécanique allant aux suspensions du véhicule, de sorte à permettre l'application d'un correcteur de freinage normalisé sur des véhicules dans lesquels ladite transmission se présente avec une orientation différente, et qui enfin, les cas échéant, puisse être réalisé aussi sous la forme d'un correcteur à trois pistons et, dans certains cas, à quatre pistons.

Selon la présente invention, dans un dispositif égalisateur destiné à un correcteur de freinage comprenant un corps avec un alésage central et avec au moin deux alésages latéraux substantiellement parallèles et équidistants par rapport à l'alésage central, et avec des pistons de correction insérés d'une façon coulissante dans les alésages latéraux et soumis à l'action de ressorts de rappel, le dispositif égalisateur comprendant: – une tige, qui est insérée d'une façon coulissante dans l'alésage central du corps du correcteur de freinage, qui se termine à l'extrémité externe par une tête conditionnée pour être accouplée avec une transmission mécanique, et qui présente entre ladite tête et la partie insérée dans l'alésage du corps une portion d'articulation tournée vers l'extrémité de la tige qui est opposée à la tête; – et un plateau, coopérant avec les extrémités externes des pistons du correcteur de freinage, percé et inséré sur ladite tige de sorte à prendre appui sur ladite portion d'articulation. Le but indiqué est atteint par le fait que, la portion d'articulation est une portion sphérique et que le plateau est substantiellement circulaire.

Grâce à ces caractéristiques, lesquelles peuvent être réalisées industriellement d'une manière très peu coûteuse, la tige du dispositif égalisateur est guidée d'une manière stable par le corps du correcteur de freinage et elle maintient une capacité de coulissement suffisante même en présence de forces transversales éventuellement appliquées par la transmission à laquelle elle est reliée; l'articulation sphérique interposée entre la tige et le plateau coopérant avec les pistons permet au plateau de s'orienter librement autour d'un axe s'étendant dans n'importe quelle direction, et, par conséquent, de compenser les défauts accidentels de symétrie du système, de quelque façon qu'ils se présentent, en assurant ainsi dans toutes les conditions la subdivision exacte entre les pistons de la force externe appliquée à la tige; et le caractère sphérique de ladite articulation, en même temps que la circularité substantielle du plateau, assure un fonctionnement correct de l'ensemble, de quelque façon que la tige et le plateau sont tournés autour de leur axe, de sorte que la position angulaire de la tige, et donc celle du fraisage de sa tête, ne demandent pas d'être préfixées et peuvent s'adapter à toute exigences d'installation sur des véhicules différents, en permettant ainsi une normalisation complète des correcteurs de freinage. En outre, grâce à la circularité substantielle du plateau, autour de l'alésage central on peut aussi disposer, à des distances égales de ce dernier, trois pistons, sur lesquels le plateau distribue équitablement les forces appliquées à sa tête, ou bien deux paires de deux pistons chacune, dans lequel cas la force est distribuée équitablement entre les deux pistons de chaque paire.

Ces caractéristiques et d'autres, et les avantages de l'objet de la présente invention ressortiront plus clairement de la suivante description d'une forme de réalisation, donnée à titre d'exemple non limitatif et représentée schématiquement dans le dessin annexé, dans lequel:

Fig. 1 est une vue en élévation latérale du correcteur de freinage incorporant le dispositif égalisateur selon l'invention;

Fig. 2 en est une vue du côté des raccords de connexion aux circuits de freinage;

Fig. 3 en est une vue partiellement coupée selon la ligne III-III de la figure 1; et

Fig. 4 montre un détail d'une tige d'égalisation avec le plateau respectif.

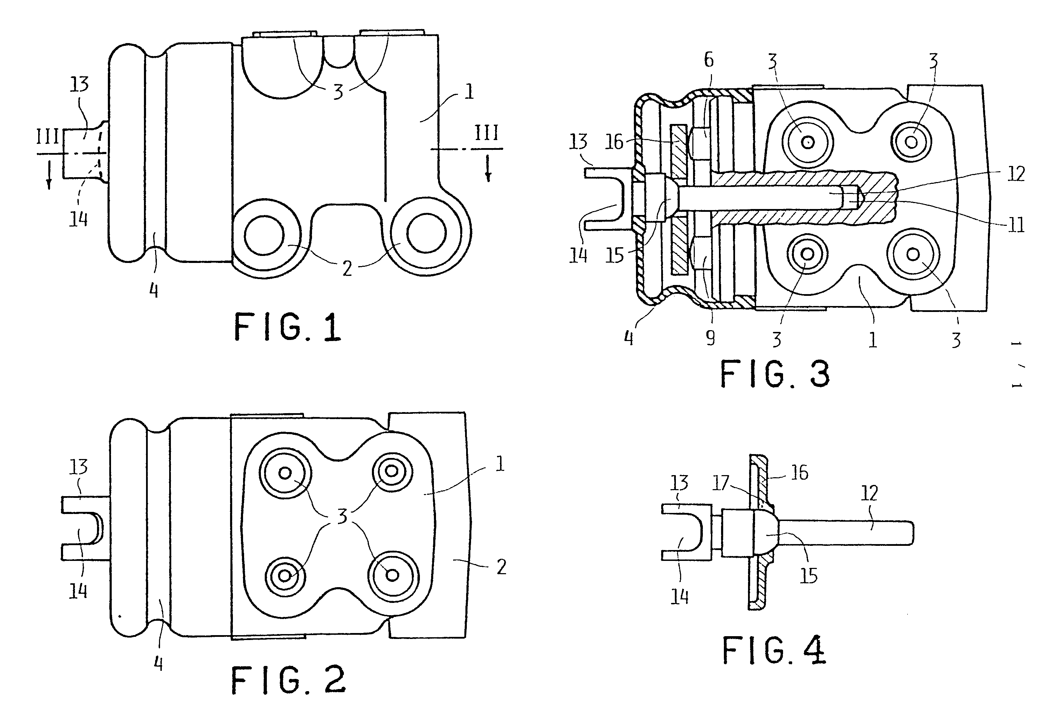

En faisant référence d'abord aux figures 1 et 2, le correcteur de freinage, qui dans ce cas est double, comprend un corps 1 pourvu d'oreilles 2 pour son fixage mécanique à la structure d'un véhicule et présentant quatre raccords hydrauliques 3 pour son reliage aux circuits de freinage. Une extrémité du corps 1 est couverte par une coiffe de caoutchouc 4, de laquelle fait saillie une tête 13 pourvue d'un fraisage transversal 14, laquelle est destinée à être reliée à une transmission mécanique allant aux suspensions du véhicule.

En faisant référence à la figure 3, dans le corps 1 sont formés deux alésages parallèles dans lesquels sont insérés d'une façon coulissante deux pistons 6 et 9 coopérant avec des ressorts de rappel. Ces pistons coopèrent avec des passages reliés aux raccords 3, en réalisant dans ces passages des étranglements variables selon la position des pistons, d'une façon qui est en soit bien connue par les hommes de métier et qui n'a pas de relation directe avec la présente invention, de sorte qu'elle ne sera pas ultérieurement décrite ici. En outre, le corps 1 présente encore un alésage 11 central, substantiellement parallèle, coplanaire et équidistant par rapport auxdits alésages pour les pistons 6 et 9.

Le dispositif égalisateur pour le correcteur de freinage décrit comprend une tige 12, insérée d'une manière coulissante dans l'alésage central 11 du corps 1 sur une longueur substantielle. Par cette expression on entend exprimer le fait que la longueur d'insertion de la tige 12 dans l'alésage respectif 11, par rapport au degré de tolérance avec lequel l'accouplement est réalisé, est telle à assurer un guidage efficace de la tige indépendamment de toute action de guidage venant éventuellement de l'exterieur, de sorte que la tige maintient sûrement sa capacité de coulissement même si quelque force ayant une composante transversale peut agir sur elle par accident. Lorsque l'usinage est effectué avec un soin normal, il est à récommander que la longueur d'insertion de la tige 12 dans l'alésage respectif 11 ne soit pas inférieure à deux fois son propre diamètre, mais plus préférablement (comme dans l'exemple représenté) cette longueur peut être de l'ordre de cinq fois le diamètre de la tige. Grâce à cet accouplement coulissant s'étendant sur une longueur importante, la tige 12, à la différence d'une tige accouplée avec le corps seulement sur une petite longueur comme dans les constructions connues, peut donc coulisser librement dans l'alésage 11, sans se bloquer ni être soumise à un frottement anormal, même en présence de sollicitations transversales accidentales. La tige 12 se termine à son extrémité externe par la tête 13 déjà mentionnée, pourvue d'un fraisage 14. De plus, dans une région intermédiaire entre la tête 13 et la partie de la tige 12 qui est accouplée avec l'alésage 11 du corps 1, la tige 12 présente une portion sphérique 15, tournée vers l'extrémité de la tige 12 qui plonge dans le corps 1.

Le dispositif égalisateur comprend encore un plateau 16, substantiellement circulaire, ayant un trou central traversé par la tige 12 et qui s'appuie contre la surface de la portion sphérique 15 de la tige, tandis que les extrémités externes des pistons 6 et 9 du correcteur de freinage prennent appui sur des points périphériques du plateau 16. Comme on le comprend, cette disposition réalise un accouplement sphérique entre la tige 12 et le plateau 26, de sorte que ce dernier est libre de s'orienter en oscillant (dans certaines limites) autour d'un axe ayant n'importe quelle direction. Par conséquence, à la différence d'un balancier tourillonné, le plateau 16 est toujours en condition de subdiviser équitablement entre les pistons 6 et 9 une force externe appliquée à la tête 13 de la tige 12, en compensant tout défaut de symétrie du système, de quelque façon que ce défaut se présente. Puisque le plateau 16 est substantiellement circulaire, il n'exige aucun lien qui lui empêche de tourner autour de son propre axe, un tel lien pouvant, dans des conditions particulières, gêner le fonctionnement de ce plateau. On comprend que la condition de circularité substantielle du plateau 16 est remplie non seulement par une configuration effectivement circulaire du plateau même, mais aussi par une configuration quelconque (par exemple polygonale) capable d'assûrer un contact correct entre le plateau 16 et les pistons 6 et 9, de quelque façon que le plateau 16 soit orienté.

De son côté, la tige 12 aussi, étant accouplée sphériquement avec le plateau 16, peut tourner autour de son propre axe sans modifier les conditions de transmission des forces. De ce fait, lors de l'installation sur le véhicule, la tige peut être orientée arbitrairement, et l'on peut toujours faire correspondre le fraisage 14 de la tête 13 à la direction, quelle que celle-ci puisse être, d'une transmission mécanique à relier à la tête 13. Il en résulte la possibilité d'installer un correcteur de freinage, complètement normalisé, sur des véhicules ayant une disposition différente de la transmission mécanique entre la suspension et le correcteur de freinage.

Comme le montre la figure 3, le plateau 16 peut avoir son propre trou central d'un rayon inférieur au rayon de la portion sphérique 15, et il peut être simplement appuyé sur cette dernière, ainsi formant un accouplement unilatéral. Alternativement, comme le montre la figure 4, le trou central du plateau 16 peut être conformé de sorte à constituer un siège sphérique concave 17 correspondant à la portion sphérique 15 et prenant appui sur cette dernière. Dans ce cas, l'accouplement peut s'étendre sur un angle légèrement plus grand que 180°, comme représenté, de sorte que le plateau 16 résulte relié à la tige 12 d'une façon stable par un accouplement bilatéral, tout en maintenant la mobilité de l'articulation sphérique. Le siège 17, dans ce cas, est assemblé avec la portion sphérique 15 par déformation de ces parties, en profitant de l'élasticité des matériaux.

Comme déjà mentionné, dans la forme de réalisation représentée le correcteur de freinage est double, tel qu'il est demandé dans la plupart des applications. Dans ce cas les trois alésages du corps doivent être coplanaires. Cependant, dans des cas particuliers peut se présenter l'opportunité d'employer un correcteur de freinage triple, c'est à dire ayant trois pistons. Grâce à l'invention on ne rencontre aucune difficulté à égaliser l'application de la force sur trois pistons, en considération de la circularité du plateau. En effet, il suffit que les alésages latéraux du corps, au nombre de trois au lieu que de deux, soient substantiellement parallèles et équidistants par rapport à l'alésage central, et qu'ils soient disposés à 120° autour de ce dernier. Enfin, il est aussi possible de disposer parallèlement et à des distances égales, à 90° l'un de l'autre autour d'un alésage central, quatre alésages latéraux, et dans ce cas l'égaliseur selon l'invention, bien que n'étant pas à même d'assurer (en présence de différences de cotes constructives) une répartition équitable de la force appliquée entre tous les quatre pistons, pourvoit cependant à égaliser les force appliquées aux deux pistons de chaque paire de pistons opposés par rapport à l'alésage central, et peut donc trouver une application utile dans les cas où une telle répartition est considérée suffisante.

Dans certains cas il peut être à propos d'insérer, entre la surface de la portion sphérique 15 et la surface du plateau 16, accouplée avec elle, une garniture en un matériau quelque peu souple, tel que le teflon ou une autre matière plastique appropriée. Cette garniture permet de compenser des petites erreurs de forme ou de cotes des surfaces accouplées, en assurant une distribution uniforme des forces transmises entr'elles, et donc un équilibrage exacte du système. Cette précaution permet de limiter la précision d'usinage demandée par les surfaces accouplées, et donc les frais y afférents. Ladite garniture peut être constituée par une rondelle interposée entre les surfaces accouplées lors du montage, ou bien elle peut être aussi constituée par un revêtement appliqué à l'une des parties accouplées, en évitant ainsi un plus grand travail de montage.

**Revendications**

1. Dispositif égalisateur, destiné à un correcteur de freinage comprenant un corps (1) avec un alésage central (11) et avec au moins deux alésages latéraux substantiellement parallèles et équidistants par rapport à l'alésage central (11), et avec des pistons de correction (6, 9) insérés d'une façon coulissante dans les alésages latéraux et soumis à l'action de ressorts de rappel comprenant — une tige (12), qui est insérée d'une façon coulissante dans l'alésage central (11) du corps (1) du correcteur de freinage, qui se termine à l'extrémité externe par une tête (13) conditionnée pour être accouplée avec une transmission mécanique, et qui présente entre ladite tête (13) et la partie insérée dans l'alésage (11) du corps une portion d'articulation (15) tournée vers l'extrémité de la tige (12) qui est opposée à la tête (13); — et un plateau (16), coopérant ave les extrémités externes des pistons (6, 9) du correcteur de freinage, percé et inséré sur ladite tige (12) de sorte à prendre appui sur ladite portion d'articulation, caractérisé en ce que la portion d'articulation est une portion sphérique et que le plateau est substantiellement circulaire.

2. Dispositif égalisateur selon la revendication 1, caractérisé en ce que ladite tige (12) est insérée dans l'alésage central (11) du corps (1) du correcteur de freinage sur une longueur non inférieure à deux fois son propre diamètre, et de préférence de l'ordre de cinq fois son propre diamètre.

3. Dispositif égalisateur selon la revendication 1, caractérisé en ce que le trou central dudit plateau (16) a un rayon inférieur à celui de ladite portion sphérique (15) de la tige (12), qu'il est simplement appuyé contre cette dernière et qu'il constitue avec elle un accouplement sphérique unilatéral (figure 3).

4. Dispositif égalisateur selon la revendication 1, caractérisé en ce que le trou central dudit plateau (16) est conformé de sorte à constituer un siège sphérique concave (17) et qu'il s'appuie par ce siège (17) contre la portion sphérique (15) de la tige (12, figure 4).

5. Dispositif égalisateur selon la revendication 4, caractérisé en ce que ledit siège sphérique concave (17) s'étend sur plus de 180° et qu'il constitue avec ladite portion sphérique (15) de la tige (12) un accouplement sphérique bilatéral assemblé par déformation élastique des parties.

6. Correcteur de freinage pour véhicules, caractérisé en ce qu'il est pourvu d'un égalisateur selon l'une quelconque des revendications précédentes.

7. Correcteur de freinage selon la revendication 6, caractérisé en ce qu'il comprend deux pistons (6, 9) insérés dans autant d'alésages latéraux parallèles, coplanaires et équidistants par rapport à l'alésage central (11) de guidage de la tige (12) de l'égalisateur.

8. Correcteur de freinage selon la revendication 6, caractérisé en ce qu'il comprend trois pistons insérés dans autant d'alésages latéraux parallèles, équidistants et situés à des distances angulaires de 120° autour de l'alésage central de guidage de la tige de l'égalisateur.

9. Correcteur de freinage selon la revendication 6, caractérisé en ce qu'il comprend quatre pistons insérés dans autant d'alésages latéraux parallèles, équidistants et situés à des distances angulaires de 90° autour de l'alésage central de guidage de la tige de l'égalisateur.

## Patentansprüche

1. Ausgleichsvorrichtung für ein Bremskorrekturgerät mit einem Körper (1), mit einer Zentralbohrung (11), mit mindestens zwei seitlichen Bohrungen, die miteinander im wesentlichen parallel und von der Zentralbohrung (11) gleich entfernt sind, und mit Korrekturkolben (6, 9), die in den seitlichen Bohrungen verschiebbar eingesetzt sind und der Wirkung von Rückholfedern unterliegen; umfassend: – einen Schaft (12), der in der Zentralbohrung (11) des Körpers (1) des Bremskorrekturgeräts verschiebbar eingesetzt ist, der an seinem Aussenende mit einem zur Kupplung mit einem mechanischen Triebwerk geeigneten Kopf (13) endet, und der zwischen dem Kopf (13) und dem in der Bohrung (11) des Körpers eingesetzten Teil einen nach dem Kopf (13) entgegengesetzten Ende des Schafts (12) gerichteten Gelenkteil (15) aufweist: – und einen Teller (16), der mit den Aussenenden der Kolben (6, 9) des Bremskorrekturgeräts mitarbeitet, der durchlocht und auf dem Schaft (12) in solcher Weise eingesteckt ist, dass er gegen den Gelenkteil (15) aufliegt; dadurch gekennzeichnet, dass der Gelenkteil ein kugelförmiger Teil ist, und dass der Teller im wesentlichen kreisrund ist.

2. Ausgleichsvorrichtung nach Anspruch 1, dadurch gekennzeichnet, dass der Schaft (12) in der Zentralbohrung (11) des Körpers (1) des Bremskorrekturgeräts über eine Länge eingesetzt ist, die mindestens zweimal mehr als dem Durchmesser, vorzüglich doch in der Grössenordnung von fünfmal mehr als dem Durchmesser ist.

3. Ausgleichsvorrichtung nach Anspruch 1, dadurch gekennzeichnet, dass das Zentraldurchloch des Tellers (16) einen Radius hat, der kleiner als der Radius des kugelförmigen Teils (15) des Schafts (12) ist, dass es gegen den Letzteren einfach aufliegt, und dass es mit dem Letzteren eine einseitige kugelförmige Kupplung bildet (Figur 3).

4. Ausgleichsvorrichtung nach Anspruch 1, dadurch gekennzeichnet, dass das Zentraldurchloch des Tellers (16) in der Weise ausgestaltet ist, dass es einen konkaven kugelförmigen Sitz (17) bildet und dass es mit diesem Sitz (17) gegen den kugelförmigen Teil (15) des Schafts (12) aufliegt (Figur 4).

5. Ausgleichsvorrichtung nach Anspruch 4, dadurch gekennzeichnet, dass der konkave kugelförmige Sitz (17) über mehr als 180° erstreckt, und dass .er mit dem kugelförmigen Teil (15) des Schafts (12) eine zweiseitige kugelförmige Kupplung bildet, die durch Einfederung der Teile zusammengebaut wird.

6. Bremskorrekturgerät für Fahrzeuge, dadurch gekennzeichnet, dass es mit einer Ausgleichsvorrichtung nach irgend einem der vorhergehenden Ansprüche ausgestattet ist.

7. Bremskorrekturgerät nach Anspruch 6, dadurch gekennzeichnet, dass es zwei Kolben (6, 9) umfasst, welche in zwei seitlichen, miteinander parallelen und koplanaren Bohrungen eingesetzt sind, die von der Zentralbohrung (11), die den Schaft (12) der Ausgleichsvorrichtung leitet, gleich entfernt sind.

8. Bremskorrekturgerät nach Anspruch 6, dadurch gekennzeichnet, dass es drei Kolben umfasst, welche in drei seitlichen, miteinander parallelen Bohrungen eingesetzt sind, die gleich entfernt sind, und um die Zentralbohrung, die den Schaft der Ausgleichsvorrichtung leitet, in einem Abstand von 120° angeordnet sind.

9. Bremskorrekturgerät nach Anspruch 6, dadurch gekennzeichnet, dass es vier Kolben umfasst, welche in vier seitlichen, miteinander parallelen Bohrungen eingesetzt sind, die gleich entfernt sind, und um die Zentralbohrung, die den Schaft der Ausgleichsvorrichtung leitet, in einem Abstand von 90° angeordnet sind.

## Claims

1. An equalizer device intended for a brake proportioning valve including a body (1) with a central bore (11) and at least two lateral substantially parallel bores equally spaced with respect to the central bore (11), and with proportioning pistons (6, 9) slidably inserted within the lateral bores and subjected to the action of return springs; comprising: – a stem (12) slidably inserted into the central bore (11) of body (1) of the brake proportioning device, terminating at its outer end with a head (13) suitable for being coupled with a mechanical connection, and having between said head (13) and the portion inserted into the body bore (11) a link portion (15) directed towards the end of stem (12) opposite the head (13); – and a plate (16) cooperating with the outer ends of pistons (6, 9) of the brake proportioning device, bored and inserted onto said stem (12) in such a way as to rest against said link portion (15); characterized in that the link portion is a spherical portion, and the plate is substantially circular in shape.

2. An equalizer device according to Claim 1, characterized in that said stem (12) is inserted within the central bore (11) of body (1) of the brake proportioning device by a portion whose length is not lesser than two times its diameter, and is preferably in the order of five times its diameter.

3. An equalizer device according to Claim 1, characterized in that the central bore of said plate (16) has a radius lesser than that of said spherical portion (15) of stem (12), that said plate simply rests against the latter, and that it forms therewith a spherical coupling active in one direction only (figure 3).

4. An equalizer device according to Claim 1, characterized in that the central bore of said plate (16) is shaped in order to form a concave spherical seat (17), and that said plate rests by this seat (17) against the spherical portion (15) of the stem (12, figure 4).

5. An equalizer device according to Claim 4, characterized in that said concave spherical seat (17) has an extension larger that 180° and it forms with said spherical portion (15) of stem (12) a bilateral spherical coupling, mounted by elastic deformation of the parts.

6. A brake proportioning device for vehicles, characterized in that it comprises an equalizer device according to any of the foregoing Claims.

7. A brake proportioning device according to Claim 6, characterized in that it comprises two pistons (6, 9) inserted in two lateral bores which are parallel, coplanar and equally spaced with respect to the central bore (11) which guides the stem (12) of the equalizer device.

8. A brake proportioning device according to Claim 6, characterized in that it comprises three pistons inserted in three lateral parallel bores which are equally spaced and are arranged at angular distances of 120° around the central bore which guides the stem of the equalizer device.

9. A brake proportioning device according to Claim 6, characterized in that it comprises four pistons inserted in four lateral parallel bores, which are equally spaced and are arranged at angular distances of 90° around the central bore which guides the stem of the equalizer device.

EP 0 184 889 B1

FIG.1

FIG.2

FIG.3

FIG.4